# EUROPEAN PATENT APPLICATION

(11) **EP 4 674 265 A1**
(43) Date of publication of application: **07.01.2026**
(21) Application number: 24306119.9
(22) Date of filing: 04.07.2024
(51) Int. Cl.: A01N 25/28, A01N 63/20, A01P 21/00

(54) **METHOD FOR ENCAPSULATING MICROORGANISMS USING MODIFIED CHITOSAN**

(71) Applicant: Centre National de la Recherche Scientifique, 75016 Paris (FR); UNIVERSITE DE MONTPELLIER, 34090 Montpellier (FR); Ecole Nationale Supérieure de Chimie de Montpellier, 34090 Montpellier (FR); Institut de Recherche pour le Développement, 13572 Marseille Cedex 02 (FR)
(72) Inventor: DAVID, Ghislain, 34080 MONTPELLIER (FR); WAHBI, Sanâa, 30250 Aubais (FR); MEYER-DERU, Lorelei, 34790 GRABELS (FR); AUVERGNE, Rémi, 34570 PIGNAN (FR); DUPONNOIS, Robin, 71640 MERCUREY (FR)
(74) Representative: Plasseraud IP

(57) **Abstract**

The present disclosure relates to a method for encapsulating active entities using modified chitosan. This method is performed at a pH from 6 to 8, so that a variety of active entities, like microorganisms, can be encapsulated. In particular, this method is useful to encapsulate plant growth-promoting bacteria.

## Description

### TECHNICAL FIELD

The present disclosure relates to a method for encapsulating active entities using modified chitosan. This method is performed at a pH from 6 to 8, so that a variety of active entities, like microorganisms, can be encapsulated. In particular, this method is useful to encapsulate plant growth-promoting bacteria.

### BACKGROUND

Sustainable agriculture associates several approaches and practices that are linked with food security, allows for more efficient use of natural resources, and contributes to accomplish some of the Sustainable Development Goals (SDGs), especially those associated with poverty, hunger, responsible consumption and production, climate change, and ecosystems. Within this context, a focus has to be done to the development of a sustainable agricultural system allowing the improvement of crop productivity with the maintenance of soil fertility and ecosystem services. The use of plant-growth promoting bacteria (PGPB) as agricultural biofertilizers can be considered as an eco-friendly alternative to the use of potentially deleterious chemical fertilizers, herbicides, fungicides, and insecticides, while improving plant productivity and health.

The design of high-performance biofertilizers involves various stages, and during this scientific and technical process, there are two major aspects that will determine the quality of the product and its commercial success: the choice of formulation and the application method. The scientific literature reports many potentially highly useful strains that did not appear on the commercial market, perhaps because of inappropriate formulation. The properties required to obtain a high-quality biofertilizer are as follows: (i) ease of use, (ii) compatibility with agricultural machinery, (iii) tolerance to storage for varying lengths of time before use, (iv) compatibility with the different environments in which it will be applied (e.g. soil type) and (v) protection of the microbial strain introduced against environmental stress.

The physical carrier of the formulation is the major factor determining the effectiveness of the biofertilizer. Five categories are generally distinguished: (1) Soils: peat, coal, clays, and inorganic soil, (2) Waste plant materials of diverse industrial and agriculture origins, (3) Inert materials: polymers, treated rock fragments, such as vermiculite and perlite, (4) Plain lyophilized microbial cultures and oil-dried bacteria that could later be incorporated into a solid carrier, and (5) Liquid inoculants, where some chemical was added to the liquid medium containing the microbial strain to improve stickiness, stabilization, surfactant production, metabolic function, and dispersal.

Among these formulation supports is the microencapsulation technique using a biopolymeric matrix, which has a number of advantages over other physical supports, in particular its positive impact on the viability of the microbial strain under conditions of abiotic stress. For example, the encapsulation of microorganisms exists already using alginate due to its low cost, rapid cross-linking and biocompatibility. However, this polysaccharide lacks mechanical stability, and the microspheres produced have to be stored in a damp, cold environment (4°C) to ensure theirstructural integrity. The use of alginate therefore implies to store and transport microspheres in damp conditions, thus alleviating the global cost of any commercialization and complicating transport conditions.

Consequently, it would be useful to provide a method for encapsulating microorganisms, which could provide microsphere having good mechanical stability, and which could be easily handled and stored.

### SUMMARY

The inventors surprisingly found that using modified chitosan makes it possible to encapsulate active entities at pH close to neutral (i.e. from 6 to 8). It is therefore possible to encapsulate microorganisms, like plant-growth promoting bacteria, as microorganisms are very sensitive to pH.

Therefore, the disclosure first relates to a method for encapsulating active entities using modified chitosan, said method comprising the following steps:
1. A step of forming an emulsion by adding an aqueous solution comprising (a) modified chitosan, and (b) active entities, to a hydrophobic phase comprising a surfactant, wherein the pH of the aqueous phase is comprised between 6 and 8, and more preferably between 6,5 and 7,5 and
2. An ionic or covalent post-crosslinking step, to obtain particles encapsulating active entities,
wherein the modified chitosan comprises at least one -NHR function, with R being a substituent comprising at least one function selected from -OH, and -SH.

Because of the mild conditions, this method can be used to encapsulate microorganisms like bacteria, without affecting them. Produced microspheres could be stored as dry sample, thus easing their transport and handling processes. Moreover, all component used in this method are biodegradable. In particular, the pH close to neutral is important: if the pH is too low or too high it leads to bacterial death, or a significant decrease in bacteria viability.

The disclosure also relates to particles encapsulating active entities, and preferably microorganisms, obtained by the method described herein.

The disclosure also relates to particles comprising active entities and modified chitosan crosslinked by sulfate ions, wherein the modified chitosan comprises at least one -NHR function, with R being a substituent comprising at least one function selected from -OH, and -SH.

The disclosure also relates to use of particles as described herein in agriculture, cosmetic, food industry, or pharmaceutical industry, preferably for promoting plant growth.

The disclosure also relates to a method for promoting plant growth, said method comprising a step of inoculating a substrate with the particles as described herein, and a step of using said substrate to grow plants.

### DETAILED DESCRIPTION

### Definitions

Chitosan is a bio-sourced polymer produced by deacetylation of chitin. It is bio-orthogonal, biodegradable and is one of the only cationic polysaccharides. It comprises β-(1→4)-linked D-glucosamine. In the present disclosure, "modified chitosan" relates to chitosan that was modified chemically. For example, chitosane wherein the free amine -NH2 is substituted by a substituent.

In the present disclosure, "active entities" relates to any entity having an activity, whether it be therapeutic, or not. Active entities encompasses substances having a therapeutic effect, a cosmetic active ingredient, a flavor, a food additive, a fertilizer, an insecticide, a protein, a peptide, a microorganism, like bacteria, virus or fungus and their produced metabolites.

In the present disclosure, "emulsion" relates to a mixture of at least two non-miscible liquids in which at least one of the liquids is present in the form of droplets dispersed in at least one other liquid. The emulsion is preferably a water in oil emulsion, wherein the hydrophobic phase is the oil phase.

### Method

The disclosure first relates to a method for encapsulating active entities using modified chitosan, said method comprising the following steps :
1. A step of forming an emulsion by adding an aqueous solution comprising (a) modified chitosan, and (b) active entities, to a hydrophobic phase comprising a surfactant, wherein the pH of the aqueous phase is comprised between 6 and 8, and more preferably between 6,5 and 7,5 and
2. An ionic or covalent post-crosslinking step, to obtain particles encapsulating active entities,
wherein the modified chitosan comprises at least one -NHR function, with R being a substituent comprising at least one function selected from -OH, and -SH.

According to an embodiment, the active entity is selected from microorganisms preferably from bacteria, and more preferably selected from plant growth-promoting bacteria.

According to an embodiment, the method is performed at a temperature comprised between 20 and 70°C, preferably between 25 and 30°C.

The concentration of modified chitosan in the aqueous solution can be comprised between 0,1 and 10% w/v, preferably between 0,5 and 7% w/v, and more preferably 1 and 5% w/v.

The modified chitosan can have a molecular weight comprised between 5 and 10000 kDa, preferably between 10 and 1000 kDa. The degree of modification can be comprised between 5 and 95%, preferably between 50 and 90%.

R is an organic substituent comprising at least one function selected from -OH, and -SH. R can be a C₁-C₁₂ alkyl substituted with one or more substitutents, preferably selected from -OR', NR'R", and =O, R', and R" being independently selected from H and C₁-C₆ alkyl, provided that R comprises at least one -OH, and -SH function.

According to an embodiment, the substituent R is of the following formula

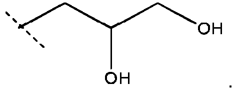

According to an embodiment, the substituent R is of the following formula

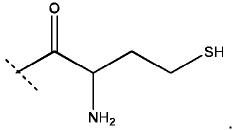

According to an embodiment, the hydrophobic phase is an oil which can be of vegetable, animal, mineral or synthetic origin. Preferably the oil is of vegetable origin. When the oil is of vegetable origin the method can comprise a large part of biobased components, like up to 90%, 95% or 99%.

Vegetable oils include crude or refined oils obtained by crushing plant seeds, kernels or fruits. In particular, oils of vegetable origin may be selected from linseed, rapeseed, sunflower, soybean, olive, palm, palm kernel, castor, wood, corn, pumpkin, grapeseed, jojoba, sesame, walnut, hazelnut, almond, shea, peanut, copra, china wood, macadamia, cotton, alfalfa, rye, safflower, copra, pine, rice, argan, and mixtures thereof.

The hydrophobic phase is an oil, preferably a vegetable oil, and more preferably peanut oil.

According to an embodiment, the emulsifier has a hydrophilic-lipophilic balance (HLB) comprised between 2 and 18, preferably between 3 and 15. The HLB can be calculated using the following method: HLB=20 x (Molar mass of hydrophobic part) / (Molar mass of molecule). The emulsifier can be any emulsifier known in the art, like a non-ionic emulsifier. The concentration of emulsifiers used can be comprised between 0,1 and 10% w/v, preferably between 1 and 5 % w/v.

According to an embodiment the post-crosslinking step is performed covalently, for example by using an aromatic aldehyde like vanillin, or a modified aldehyde chitosan.

The modified aldehyde chitosan can have a molecular weight comprised between 0.2 and 10000 kDa, preferably between 1 and 10 kDa. The degree of modification can be comprised between 5 and 95%, preferably between 10 and 70%.

Preferably, the modified aldehyde chitosan has the following structure:

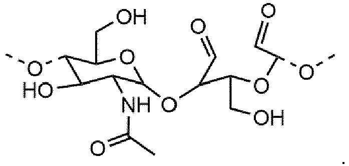

According to another embodiment the post-crosslinking step is performed ionically and comprises the addition of a sulfate salt or a polysulfate salt to the emulsion obtained in step 1. The sulfate salt can be selected from the list consisting of MgSO₄, Na₂SO₄, NaHSO₄, Li₂SO₄, K₂SO₄, CaSO₄, CuSO₄, FeSO₄, ZnSO₄, (NH₄)₂SO₄, sodium dodecyl sulfate, and mixtures thereof.

The concentration of sulfate salt or polysulfate salt can be comprise between 0,1 and 10M, preferably between 1 and 5M. One of the advantages of using a sulfate salt in the post-crosslinking step is the avoidance of the use of toxic material like glutaraldehyde.

### Particles

The particles obtained by the method are usually microsphere having an average diameter comprised between 2 and 1000 µm, preferably between 3 and 500 µm, and more preferably between 5 and 100 µm. The diameter can be measured by laser diffraction.

The disclosure also relates to particles encapsulating active entities, and preferably microorganisms, obtained by the method described herein.

The disclosure also relates to particles comprising active entities and modified chitosan crosslinked by sulfate ions, wherein the modified chitosan comprises at least one -NHR function, with R being a substituent comprising at least one function selected from -OH, and -SH, as described above.

### Use of particles

The particles as described herein have a variety of applications. They can be used in agriculture, cosmetic, food industry, in organic chemistry or pharmaceutical industry. The use depends on the active entities encapsulated in the particles. For example, the particles can be used for promoting plant growth, in particular, if the entities encapsulated are plant growth-promoting bacteria.

The disclosure also relates to a method for promoting plant growth, said method comprising a step of inoculating a substrate with the particles as described herein, and a step of using said substrate to grow plants.

Other aspects of the present disclosure relate to growing plants in the presence of particles described herein in order to increase one or more plant growth characteristics in the plant.

Plants of the present disclosure may be of any kind or from any source known in the art. Suitable plants used with the particles and methods of the present disclosure may be grown in any environment or in any growth medium, such as solid medium or liquid medium. Suitable plants of the present disclosure may include plants that are grown in favorable conditions and those that are grown in harsh environments, such as plants grown in soils that are dry, acidic, or both; plants that are prone to infection by pathogens, such as fungi; plants grown in a desert or and environment; plants grown in nitrogen-poor environments; plants grown in nutrient-poor environments; plants grown in low pH conditions; plants grown in high pH conditions; plants grown in low temperature conditions; and plants grown in high temperature conditions.

Suitable plants of the present disclosure include, without limitation, crop plants, energy crop plants, plants that are used in agriculture, and plants used in industrial settings. As an example of suitable plant, one can cite plants from the Fabaceae family including soybeans, beans, peas, chickpeas, broad beans, peanut, carob, fenugreek and liquorice.

Plant growth characteristics of the present disclosure include plant biomass, plant growth rate, plant yield, root biomass, nodulation, nitrogen utilization, nutrient utilization, salt tolerance, resistance to one or more pathogens, resistance to fungal growth, growth under and conditions, growth under and soil conditions, growth under low pH conditions, growth under low pH soil conditions, growth under high pH conditions, growth under high pH soil conditions, growth under low temperature conditions, growth under low temperature soil conditions, growth under high temperature conditions, and growth under high temperature soil conditions. As will be apparent to one of skill in the art, certain characteristics, for example nodulation, include other forms of life that interact with the plant.

In certain aspects, growing a plant in the presence of particles of the present disclosure increases at least one plant growth characteristic by about 5% to about 200%, for example by about 10 to 100%. According to an embodiment, the presence of particles of the present disclosure increases at least one plant growth characteristic, evaluated after 15 days, by about 5% to about 40%, for example by about 10% to about 30%.

As disclosed herein, plant biomass and yield refer to the accumulation of plant matter in any part or all of the plant, with yield including, without limitation, the crop production of crop plants.

As disclosed herein, nodulation includes any process or quality associated with root nodule formation, including but not limited to nodule size, color, clustering, development, branching of vascular bundles, and colonization by rhizobia.

As disclosed herein, nitrogen and nutrient utilization include, without limitation, how well nitrogen or nutrients are taken up by the plant, the amounts of nitrogen or nutrients present in the plant, tissues thereof, or surrounding soil environment, and/or how efficiently the nitrogen or nutrients are incorporated or utilized by the plant.

As disclosed herein, resistance to pathogens or fungal growth includes, without limitation, increased plant survival upon infection with pathogen or fungal growth, a decreased growth rate or size of pathogen or fungal growth on or near the plant, or a diminished frequency with which pathogen or fungal growth appears on or near the plant.

As disclosed herein, and conditions and and soil conditions refer to any environment in which the plant and its immediate surroundings receive less than 50 mm of water per month. Arid conditions and and soil conditions may also refer to any environment characterized by irregular exposure of plants to water, regardless of the total amount received.

As disclosed herein, low pH conditions and low pH soil conditions refer to any environment for plant growth with a pH of between about 0.0 to about 6.0. High pH conditions and high pH soil conditions refer to any environment for plant growth with a pH of about 6.1 to about 14.

As disclosed herein, low temperature and low temperature soil conditions refer to an ambient or soil temperature less than or equal to 15° C. High temperature and high temperature soil conditions refer to an ambient or soil temperature greater than or equal to 35° C.

Any suitable method known in the art for growing plants in the presence of particles disclosed herein may be used.

In some aspects, growing a plant in the presence of particles of the present disclosure includes contacting particles of the present disclosure with plant seed. In other aspects, growing a plant in the presence of particles of the present disclosure includes contacting particles of the present disclosure with a plant or part thereof.ln further aspects, growing a plant in the presence of particles of the present disclosure includes contacting the particles of the present disclosure with plant roots or the plant rhizosphere. Alternatively, the particles of the present disclosure may be added to the soil or other suitable growth medium containing the rhizosphere using any suitable method known in the art. As disclosed herein, the particles of the present disclosure may be used at any concentration or dose sufficient to increase one or more plant growth characteristics of a plant that is grown in the presence of such particles.

### FIGURES LEGENDS

Figure 1 represents ¹H DOSY NMR analysis of chitosan modified with glycidol in D₂O.
Figure 2 represents ¹H DOSY NMR analysis of chitosan modified with homocysteine thiolactone in D₂O.
Figure 3 represents observations of encapsulated bacteria by A: optical microscopy, B: green fluorescence displaying living bacteria, and C: by red fluorescence displaying dead bacteria.
Figure 4 represents the diagram of seed planting. A: watertight plastic tube; B: clay beads; C: glass beads; D: substrate; E: bluter cloth placed between soil and tube walls; F: germinated seed placed between bluter cloth and tube wall, G: germinated seed.
Figure 5 displays the nodules resulting from symbiosis of Crotalaria juncea with Bradyrhizobium strain ORS 1229. A: After 15 days in the culture chamber, B: After washing and untangling the roots. Nodules are surrounded by circles for ease of observation.
Figure 6 displays a bar chart representing the numbers of nodules (left bar) and the ratio of numbers of nodules/produced biomass (right bar) obtained for the inoculation test according to the examples.

### EXAMPLES

### 1. Materials and Methods

All chitosans used were purchased from Glentham Science and used as received. Acetic acid (99%), glycidol, magnesium sulfate, peanut oil, Span 80, patent blue, D-homocysteine thiolactone hydrochloride, sodium nitrite, sulfuric acid, hydrogen peroxide, imidazole, sodium periodate, phenolphtalein, acetone (>98%), petroleum ether (35-60°C), acetonitrile and diethyl ether were purchased from Sigma-Aldrich and used without further purification. Deuterated solvent such as D2O, deuterated acetic acid and D1-trifluoroacetic acid were purchased from Eurisotop. Dialysis membranes (12-14 kDa) were purchased from Spectra/Por. Bradyrhizobium strain (ORS 1229) was cultivated at 28 °C in Yeast Mannitol growth medium, and Fabaceae were cultivated in a substrate made of 50 % non-fertilized soil with 50 % zeolite in the French Agricultural Research Centre for International Development (CIRAD) premises in Montferrier-le-Lez. Fluorescent dyes were provided by Thermo Fisher Scientifc as Invitrogen Live/DeadTM BacLightTM Bacterial Viability Kit.

### Characterisation

Aspect and integrity of the produced microspheres are observed using an optical microscope from Leica with camera lens x10, x20 and x50. Microspheres are suspended in distilled water and decked with cover glass. Viability of bacteria was observed by dye fluorescence on a Nikon AZ100 microscope equipped with fluorescent filters at 535 and 635 nm.

Microspheres diameter are evaluated with a laser diffraction spectrometer Mastersizer 3000 equipped with a helium-neon laser 4 mW emitting at 632,8 nm and a 10 mW laser emitting at 470 nm. Microspheres are suspended in distilled water and added to the dispersion unit before being analyzed.

UV-visible analyses were conducted using a Perkin Elmer lambda 35 UV-visible spectrometer equipped with a PTP-1 + 1 Peltier system in quartz vial (length = 1 cm).

Samples are prepared in deuterated water at 10 mg.mL-1 and if necessary some drops of deuterated acetic acid or deuterated trifluoroacetic acid in order to dissolve chitosan. Analyses are performed on a Bruker Avance 400 MHz spectrometer at 25 or 70°C. Chitosan acetylation degree (DA) and substitution degree (DS) are calculated by nuclear magnetic resonance of hydrogene (RMN 1H). Specters are obtained with an acquisition time of 4 seconds, 120 scans and 10 seconds of relaxation delay.

Efficient grafting of glycidol or homocysteine thiolactone on chitosan are evaluated by diffusion ordered spectroscopy of hydrogen (DOSY) on a Bruker Avance 600 MHz spectrometer.

### 2. Chitosan derivatization with glycidol

The derivatization of chitosan is performed using a procedure similar to the one described in E. Loubaki et al. "Modification chimique du chitosane avec la 6-gluconolactone, la β-propiolactone et le glycidol", Eur. Polym. J. 25 (1989) 379-384 (cf. scheme below). Chitosan (500 mg, 2 % w/v, 1 eq) is solubilized in 25 mL of a 1 % v/v acetic acid solution and stirred until complete chitosan dissolution. The solution is heated to 70 °C, prior to the addition of glycidol (1eq). The reaction is stirred at 500 rpm and 70 °C during 72h. The brown polymer is gathered by precipitation in cold acetone and dialyzed against water in a 12-14 kDa membrane.

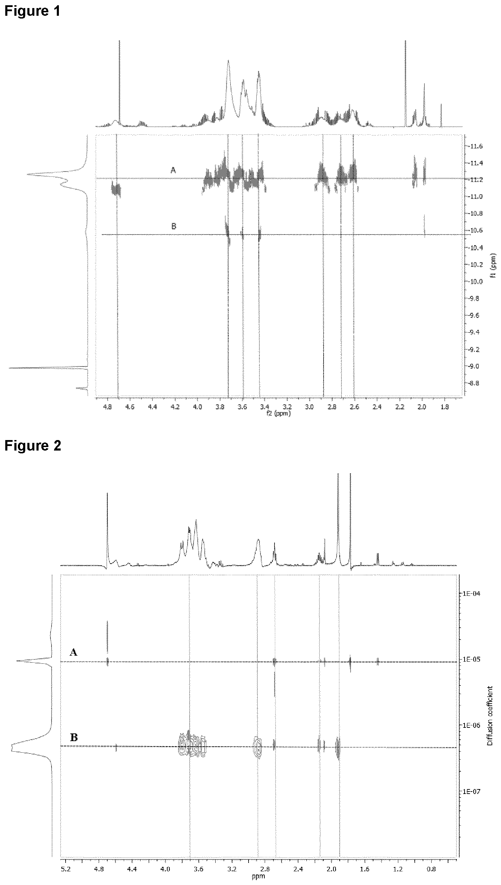

Glycidol grafting was confirmed by DOSY analysis (Figure 1). The spectrum indicates at diffusion coefficient A, a compound merging typical signals of chitosan at 4 ppm and 2 ppm as well as signal corresponding to glycidol functionalization at 2.6-2.8 ppm. These observations attest thus the efficient glycidol grafting on chitosan. Signals corresponding to non-functionalized chitosan appear at diffusion coefficient B, in an insignificant proportion.

Chitosan could be thus functionalised with a substitution degree of 8%.

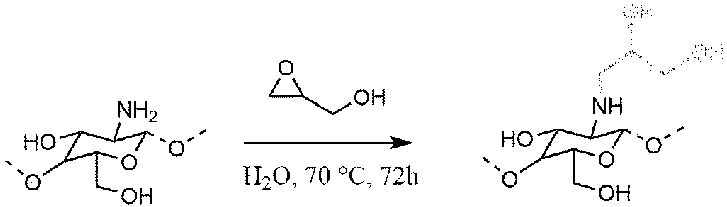

### 3. Chitosan derivatization with homocysteine thiolactone

The protocol is inspired by the method developed by Juntapram et al. "Synthesis and characterization of chitosan-homocysteine thiolactone as a mucoadhesive polymer" (2012) Carbohydrate Polymers, 87(4), 2399-2408 (cf. scheme below). 250 mg of chitosan 30 kDa (1% w/v, 1 eq), are solubilized in 25 mL of a 1% v/v aqueous acetic acid solution. The solution is stirred for 16 hours at room temperature to ensure complete solubilization of the chitosan. The solution is then placed in an inert environment by adding a stream of nitrogen to the reaction medium. Once the chitosan has been solubilized, 170.2 mg of imidazole (2.5 mmol, 1.7 eq) are added to the chitosan solution at room temperature or 70°C. Finally, homocysteine thiolactone hydrochloride (1 eq) is added to the reaction medium. The reaction is maintained under an inert atmosphere, at room temperature or 70°C, and stirred at 500 rpn for 24 or 72 hours. The chitosan thiol is then recovered by precipitation in cold acetone and washed twice with diethyl ether. Depending on the chitosan used and the number of equivalents, between 300 mg and 1 g of odorous ochre solid is obtained. Substitution degree is calculated following Ellman's free thiol dosage as described by Simpson "Estimation of Free Thiols and Disulfide Bonds Using Ellman's Reagent" CSH Protocols (2008). Chitosan could thus be functionalized with a substitution degree of 45% %.

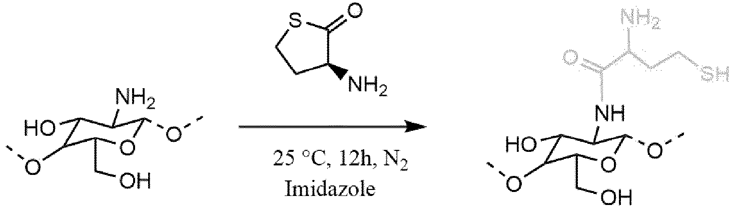

As with glycol chitosan, the functionalization of chitosan was verified by DOSY proton analysis (Figure 2). The spectrum obtained indicates in A the presence of ungrafted homocysteine thiolactone and in B chitosan grafted with homocysteine thiolactone. Indeed, the typical chitosan signals at 1.9, 2.9 and 3.7 ppm, marked by red lines, have a diffusion coefficient identical to the grafted homocysteine thiolactone signal at 2.1 and 2.6 ppm, marked by blue lines. Polycysteine signals are no longer observed, indicating that diethyl ether washes have separated it from the final product.

### 4. Microsphere formulation

Modified chitosan (60 mg, 2 % w/v, 1 eq) is dissolved in 3 mL water at neutral pH and stirred at room temperature until chitosan complete dissolution. Modified chitosan could be dissolved in a 1 % v/v acetic acid solution (pH=4). However, viability test of *Bradyrhizobium* strain shows that this chitosan solution leads to bacterial death. Moreover, bacteria viability is limited in basic solution (pH > 8). Thus, chitosan dissolution in neutral solution is essential.

Peanut oil (20 mL) with 1,5 % v/v of Span 80 is stirred at 700 rpm and maintained to 28 °C. Modified-chitosan solution is then added dropwise to the peanut oil solution, and the emulsion is left to stabilize for 30 min at 28 °C. Magnesium sulfate solution (2 mL, 2 M, 23 eq) is added to the white, opaque emulsion. After 3 h of reticulation, microspheres are collected by centrifugation and washed several times with petroleum ether and acetone.

### 5. Encapsulation of blue patent

Modified chitosan (60mg, 2% w/v, 1 eq) is dissolved in an aqueous solution containing patent blue (10 mg, 0,1 eq) and stirred at room temperature until chitosan complete dissolution. Peanut oil (20 mL) with 1,5% v/v of Span 80 (CAS = 1338-43-8) is stirred at 700 rpm and maintained at 28 °C. Glycol-chitosan solution is then added dropwise to the peanut oil solution, and the emulsion is left to stabilize for 30 min at 28 °C. Magnesium sulfate solution (2 mL, 2 M, 23 eq) is added to the white, opaque emulsion. After 3 h of reticulation, microspheres are collected by centrifugation and washed several times with petroleum ether and acetone.

### Analysis

Chitosan microspheres should be broken in order to measure encapsulation efficiency. To that end, 10 mg of microspheres containing patent blue are suspended in 2 mL of a sodium nitrite solution (2 mg/mL) and stirred at 80 °C for 12 h. The same protocol is applied to empty microspheres as blank for UV-Vis analysis.

To assess the release of patent blue over time, 20 mg of microspheres containing patent blue are suspended in 4 mL distilled water. The suspension is stirred at 500 rpm at room temperature. At regular interval time, 100 µL are collected, diluted in 4 mL water and analyzed with an UV-Vis spectrophotometer. First, a calibration curve was drawn at 311 nm, corresponding to patent blue maximum absorbance.

The results show a 75 % encapsulation efficiency.

### 6. Bacteria encapsulation

Modified chitosan (60mg, 2% w/v, 1eq) is dissolved in water and stirred at room temperature until chitosan complete dissolution. Bradyrhizobium strain in aqueous NaCl solution (9 mL, 0,15 M, turbidity = 1), is centrifuged at 3,0 G during 10 minutes at room temperature. After disposal of the supernatant, bacteria are retook in glycol-chitosan solution until homogeneous bacteria suspension. Peanut oil (20 mL) with 1,5% v/v of Span 80 is stirred at 700 rpm and maintained at 28 °C. Glycol-chitosan solution with bacteria is then added dropwise to the peanut oil solution, and the emulsion is left to stabilize for 30 min at 28 °C. Magnesium sulfate solution (2 mL, 2 M, 23 eq) is added to the white, opaque emulsion. After 3 h of reticulation, microspheres are collected by centrifugation and washed several times with distilled water.

### Determination of viability

Viability of bacteria was evaluated by dye fluorescence. 10 mg of microspheres were suspended in a 0.15 M NaCl solution supplemented with 1.5 µL of Suto 9 dye and 1.5 µL of propidium iodide. The solution is stirred in the dark at room temperature for 15 minutes prior to microscopic observation.

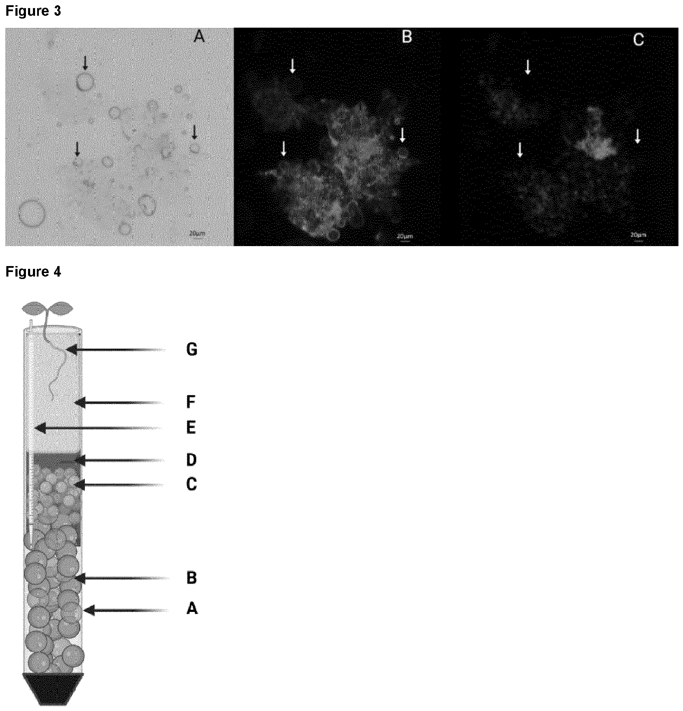

Figure 3 shows microscopic observation and exhibits bacteria viability in generated microspheres by green fluorescence (Figure 3 B). Even if a small proportion of bacteria died in the process, it can be observed by red fluorescence (Figure 3 C) that these dead bacteria are not encapsulated, thus attesting the benefits of bacteria encapsulation on microorganisms viability.

### 7. Plants inoculation

### Sterilization

Crotalaria juncea seeds are immersed in a 95% v/v sulfuric acid solution for 10 minutes, then rinsed with distilled water. Under sterile conditions, they are then immersed in hydrogen peroxide for 10 minutes and rinsed three times with distilled water. The seeds are then deposited on a layer of 0.8% w/v agar water and placed under sterile conditions in the dark in a controlled tropical culture chamber for 3 days (28°C; relative humidity 70-80%; photoperiod 16/8).

The Crotalaria juncea substrate consists of 50% unfertilized potting soil and 50% zeolite. The substrate, clay beads and glass beads used are sterilized by autoclaving. Blasting cloths and plastic tubes are soaked in bleach for 24 hours, and then rinsed thoroughly.

### Plantation and inoculation

9 seeds are prepared for each type of microsphere (glycol-modified chitosan and thiol modified chitosan), in addition to 9 seeds which will not be inoculated (negative control), 9 seeds which will be inoculated with unencapsulated bacteria suspended in distilled water (positive control), and 9 seeds which will be inoculated with empty microspheres. Seeds are planted as shown in Figure 4 in an in vitro culture system. Sealed plastic tubes (A) are fitted with clay beads (B) to drain the system, and glass beads (C) to limit substrate flow. A blending cloth (F) is placed against the wall of the tube, and the substrate (D) is added to the blending cloth. A 2-mL plastic pipette (E) is slid along the tube wall to facilitate watering. Finally, the germinated seed (G) is placed between the tube wall and the blasting cloth. The system thus set up for each seed is watered with unsoftened water until the substrate is soaked, then the tubes are surrounded by an opaque plastic sheath to protect the growing roots from light.

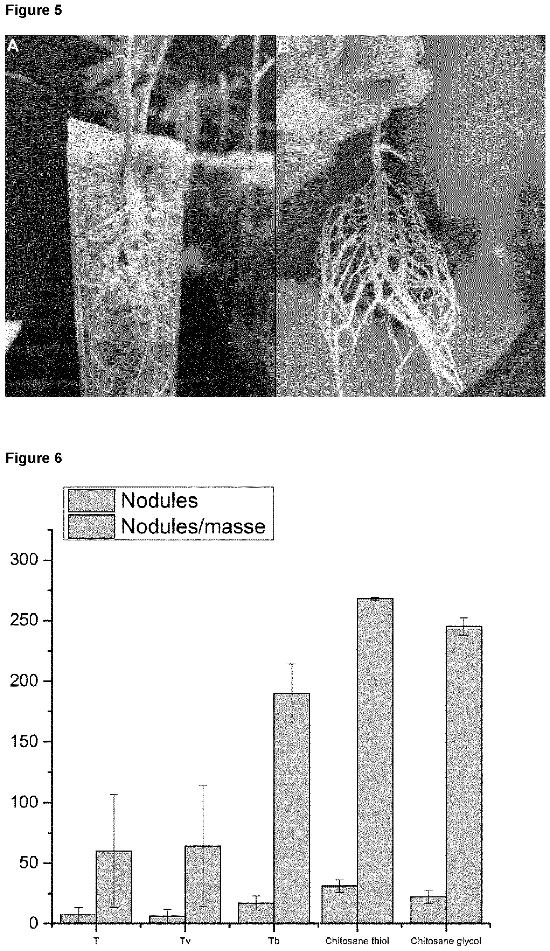

The inoculants (microspheres or bacteria solution) are suspended in 10 mL of water, then evenly distributed in each tube by deposition on the substrate surface. Plants are placed in a tropical growth chamber (28°C; relative humidity 70-80%; photoperiod 16/8) and watered with unsoftened water every 3 days for 15 days. The nodules of each plant are then counted by removing plants from the tube (see Figure 5) and the plants are dried in an oven at 50°C for 15 days to assess the dry biomass produced.

Plants inoculated with microspheres containing bacteria displayed between 10 and 30 % more nodules and produced 20 to 30 % more biomass than plants inoculated with free bacteria solution after only 15 days of culture. The results are presented in Figure 6:
- T: control: plant with no inoculation
- Tv: control: plant inoculated with microspheres with no bacteria
- Tb: plant inoculated with bacteria non encapsulated
- Chitosane thiol: plant inoculated with microspheres produced with thiol-modified chitosane, encapsulating bacteria
- Chitosane glycol: plant inoculated with microspheres produced with glycol-modified chitosane, encapsulating bacteria.

## Claims

1. A method for encapsulating active entities using modified chitosan, said method comprising the following steps :
1. A step of forming an emulsion by adding an aqueous solution comprising (a) modified chitosan, and (b) active entities, to a hydrophobic phase comprising a surfactant, wherein the pH of the aqueous phase is comprised between 6 and 8, and more preferably between 6,5 and 7,5 and
2. An ionic or covalent post-crosslinking step, to obtain particles encapsulating active entities,
wherein the modified chitosan comprises at least one -NHR function, with R being a substituent comprising at least one function selected from -OH, and -SH.

2. The method according to claim 1, wherein the active entity is selected from microorganisms preferably from bacteria, and more preferably selected from plant growth-promoting bacteria.

3. The method according to any of the preceding claims, wherein the method is performed at a temperature comprised between 20 and 70°C, preferably between 25 and 30°C.

4. The method according to any of the preceding claims, wherein the substituent R is of the following formula

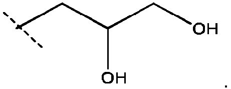

5. The method according to any of the preceding claims, wherein the substituent R is of the following formula

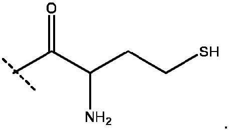

6. The method according to any of the preceding claims, wherein the particles obtained are microsphere having an average diameter comprised between 2 and 1000 µm, preferably between 3 and 500 µm, and more preferably between 5 and 100 µm.

7. The method according to any of the preceding claims wherein the hydrophobic phase is an oil, preferably a vegetable oil, and more preferably peanut oil.

8. The method according to any of the preceding claims wherein the emulsifier has a hydrophilic-lipophilic balance comprised between 2 and 18, preferably between 3 and 15.

9. The method according to any of the preceding claims, wherein the post-crosslinking step is performed ionically and comprises the addition of a sulfate salt or a polysulfate salt to the emulsion obtained in step 1.

10. The method according to claim 9 wherein the sulfate salt is selected from the list consisting of MgSO₄, Na₂SO₄, NaHSO₄, Li₂SO₄, K₂SO₄, CaSO₄, CuSO₄, FeSO₄, ZnSO₄, (NH₄)₂SO₄, sodium dodecyl sulfate, and mixtures thereof.

11. Particles encapsulating active entities, and preferably microorganisms, obtained by the method according to one of the preceding claims.

12. Particles comprising active entities and modified chitosan crosslinked by sulfate ions, wherein the modified chitosan comprises at least one -NHR function, with R being a substituent comprising at least one function selected from -OH, and -SH.

13. Use of particles according to claim 11 or 12 in agriculture, cosmetic, food industry, or pharmaceutical industry, preferably for promoting plant growth.

14. A method for promoting plant growth, said method comprising a step of inoculating a substrate with the particles according to claim 11 or 12, and a step of using said substrate to grow plants.
